# EUROPEAN PATENT APPLICATION

(11) **EP 2 954 810 A1**
(43) Date of publication of application: **16.12.2015**
(21) Application number: 15171506.7
(22) Date of filing: 10.06.2015
(51) Int. Cl.: A47J 27/21

(54) **IMPROVEMENTS IN AND RELATING TO KETTLES**

(30) Priority: 10.06.2014 GB 201410254
(71) Applicant: Spectrum Brands (UK) Limited, Manchester, M35 0HS (GB)
(72) Inventor: Saba, Simon, Manchester, Lancashire M35 0HS (GB)
(74) Representative: Appleyard Lees

(57) **Abstract**

A kettle comprising a body portion forming a water reservoir and, connected to the body portion, a handle; wherein the handle comprises a first handle portion at least partly over the kettle body portion and a second handle portion at least partly to the side of the body portion; wherein the second handle portion is a closed loop.

## Description

### Field of the Invention

The present invention relates to kettles.

### Background to the Invention

Little attention has been paid to handles for kettles and to improvements therefor.

The present invention aims to provide an improved kettle by providing a novel handle.

### Summary of the Invention

According to the present invention, there is provided a kettle comprising a body portion forming a water reservoir and, connected to the body portion, a handle; wherein the handle comprises a first handle portion at least partly over the kettle body portion and a second handle portion at least partly to the side of the body portion; wherein the second handle portion is a closed loop.

Suitably, the first handle portion is connected to the second handle portion which may include the first being integral with the handle second portion.

Suitably the first handle portion is over the centre of gravity of the kettle.

Suitably the first handle portion is open. By *"open"* is meant that there is an open end of the handle portion.

Suitably, the first handle portion is arcuate.

Suitably, the handle is connected to the body by the second handle portion.

Suitably, the handle forms the shape of a number 6.

### Brief Description of the Drawings

The present invention will now be described, by way of example only, with reference to the accompanying drawings; in which:
Figure 1 is a perspective view of a kettle according to the present invention.
Figure 2 is a side view of the kettle shown in Figure 1.
Figure 3 is a front view of the kettle shown in Figures 1 and 2.
Figure 4 is a plan view of the kettle shown in Figures 1-3.

### Description of a Preferred Embodiment

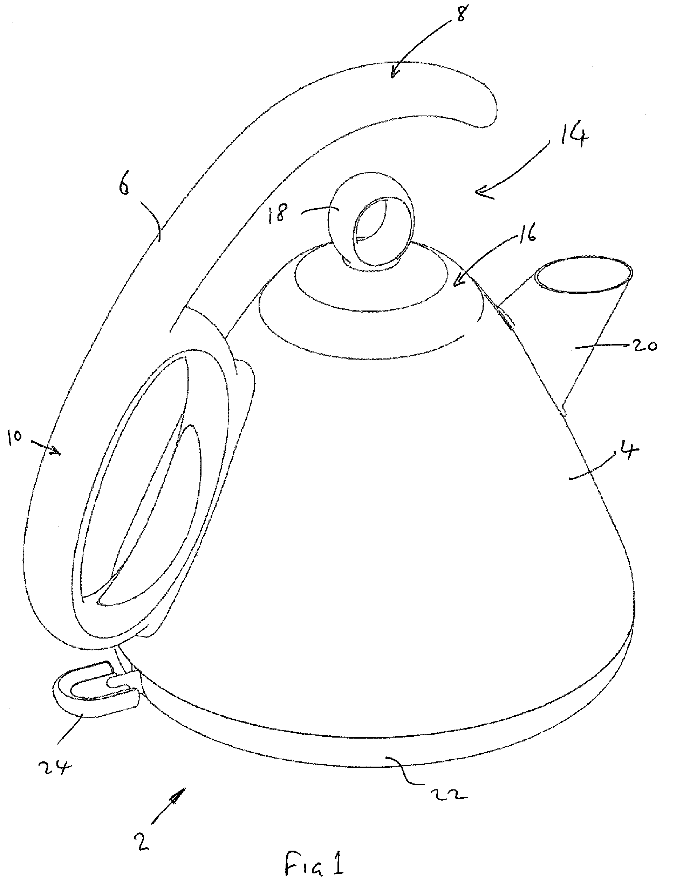

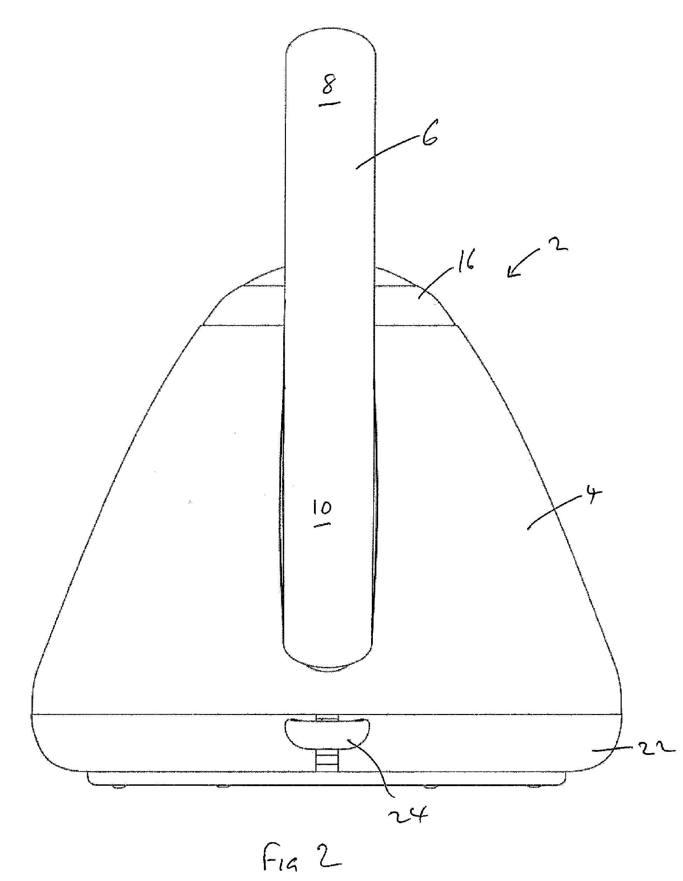

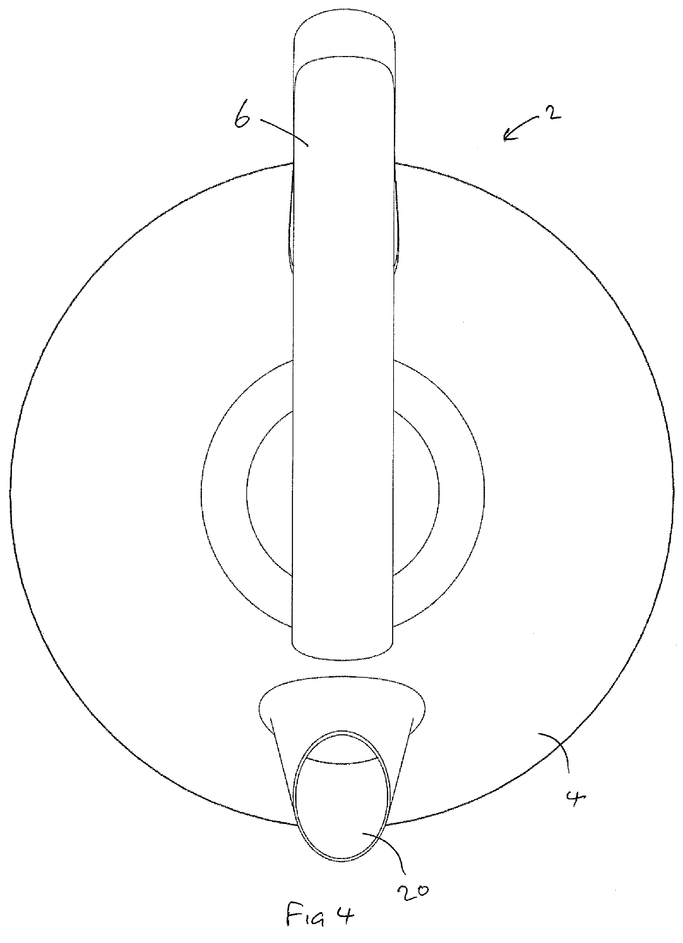

Referring to Figures 1-4 of the accompanying drawings, there is shown a kettle 2 comprising a body portion 4 and a handle 6. The body 4 is frusto-conical in shape. The body 4 forms an internal reservoir for water as is well known in the art.

The handle 6 is formed to resemble the shape of a numeral 6. The handle includes a first handle portion 8 and a second handle portion 10. The first and second handle portions 8, 10, respectively, are integrally formed or connected to each other.

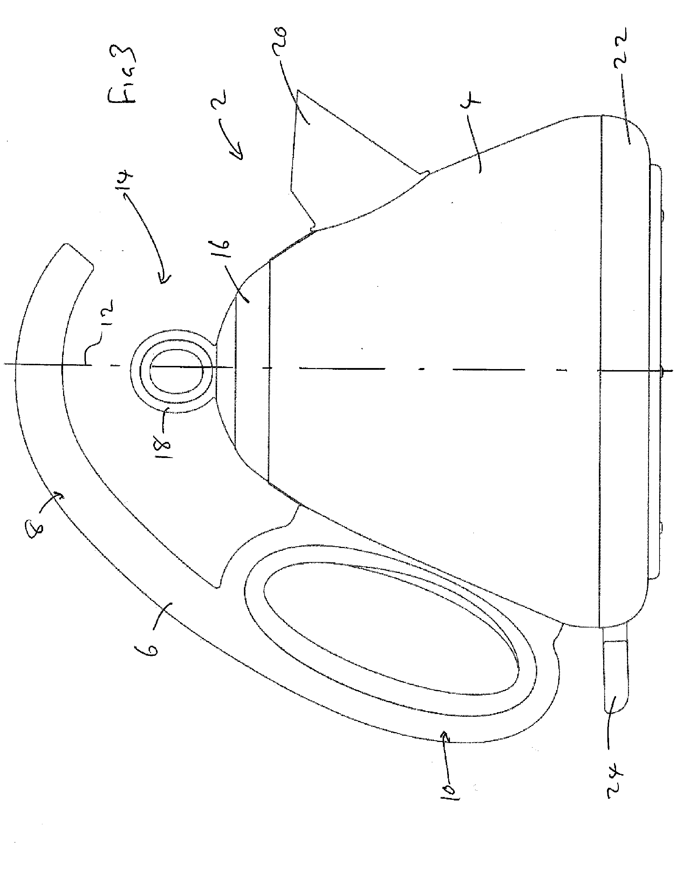

The first handle portion 8 is arcuate and extends over the top of the kettle body 4. It provides a carrying handle over the centre of gravity of the kettle. The centre of gravity is indicated schematically in Figure 3 of the accompanying drawings by line 12. The first handle portion 8 is open in that there is a free end providing a space, indicated schematically at 14.

The second handle portion 10 comprises a closed loop in an oval shape. The second handle portion 10 is set to one side of the first handle portion and is connected to the side of a kettle body 4. The second handle portion is to the side of the centre of gravity of the kettle 2 and is mounted between the base and top of the kettle.

The kettle 2 further comprises a lid 16 which is circular to fit a circular hole in the top of the body 4 of the kettle 2. The lid 16 includes a closed loop handle 18.

Additionally, the kettle 2 comprises a spout 20 mounted opposite the handle 6.

The kettle 2 is mounted on a base 22 in which is provided an actuation switch 24.

Accordingly, in use, the handle 6 provides two carrying positions for the kettle 2. The first handle portion 8 provides a first carrying position in which a user can conveniently move the kettle 2 around because it is being carried over its centre of gravity and therefore it can be carried at the end of a user's arm without providing a twisting force on a wrist.

The second handle portion 10 provides a second a carrying position to the side of the kettle providing for convenient pouring.

Furthermore, the provision of both the first and second handle portions providing two concurrent carrying positions means that a user can hold the kettle with two hands supporting much of the weight of the kettle from the first handle portion 8 and using the second handle portion 10 to provide some lifting usually but primarily a tipping action for pouring the kettle 2.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A kettle comprising a body portion forming a water reservoir and, connected to the body portion, a handle; wherein the handle comprises a first handle portion at least partly over the kettle body portion and a second handle portion at least partly to the side of the body portion; wherein the second handle portion is a closed loop.

2. A kettle according to claim 1, wherein the first handle portion is connected to the second handle portion which may include the first being integral with the handle second portion.

3. A kettle according to claim 1 or 2, wherein the first handle portion is over the centre of gravity of the kettle.

4. A kettle according to any one of claims 1-3, wherein the first handle portion is open.

5. A kettle according to any one of claims 1-4, wherein the first handle portion is arcuate.

6. A kettle according to any one of claims 1-5, wherein the handle is connected to the body by the second handle portion.

7. A kettle according to any one of claims 1-6, wherein the handle forms the shape of a number 6.
